## Europäisches Patentamt

## European Patent Office

## Office européen des brevets

(19)

(11) Veröffentlichungsnummer : **0 067 322**
**B1**

(12)

# EUROPÄISCHE PATENTSCHRIFT

(45) Veröffentlichungstag der Patentschrift :
15.08.84

(51) Int. Cl.³ : **B 60 R 21/10**

(21) Anmeldenummer : **82104474.0**

(22) Anmeldetag : **21.05.82**

(54) **Vorrichtung zum Aufrollen des Gurtbandes von Sicherheitsgurten, insbesondere für Kraftfahrzeuge.**

(30) Priorität : **22.05.81 DE 3120379**

(43) Veröffentlichungstag der Anmeldung :
**22.12.82 Patentblatt 82/51**

(45) Bekanntmachung des Hinweises auf die Patenterteilung : **15.08.84 Patentblatt 84/33**

(84) Benannte Vertragsstaaten :
**FR IT**

(56) Entgegenhaltungen :
**DE-A- 1 531 545**
**DE-A- 1 531 546**
**DE-A- 2 256 184**
**FR-A- 2 333 525**
**GB-A- 1 428 111**
**US-A- 3 074 761**
**US-A- 3 695 545**
**US-A- 3 876 164**

(73) Patentinhaber : **Ernst, Hans-Hellmut**
**Eschenweg 4**
**D-2061 Sülfeld (DE)**

(72) Erfinder : **Ernst, Hans-Hellmut**
**Eschenweg 4**
**D-2061 Sülfeld (DE)**

(74) Vertreter : **Oedekoven, Wolf-Dieter, Dipl. Ing.**
**Widenmayerstrasse 5**
**D-8000 München 22 (DE)**

Jouve, 18, rue St-Denis, 75001 Paris, France

## Beschreibung

Die Erfindung bezieht sich auf eine Vorrichtung zum Aufrollen des Gurtbandes von Sicherheitsgurten, insbesondere für Kraftfahrzeuge, mit

a) einem U-förmigen Gehäuse, welches einen Boden sowie zwei zu demselben senkrechte, zueinander parallele Seitenschenkel aufweist und mit zwei Sperrnasen sowie zwei Längsschlitzen versehen ist, die jeweils im einen bzw. anderen Seitenschenkel im wesentlichen parallel zur Gurtbandabzugsrichtung verlaufen und an einem Ende geschlossen sind, und

b) einer Aufwickelwelle für das Gurtband, welche an den beiden Enden je eine am Außenumfang verzahnte Sperrscheibe aufweist und in den Längsschlitzen des Gehäuses drehbar gelagert sowie zum Eingriff mit den Verzahnungen der Sperrscheiben in die Sperrnasen des Gehäuses entgegen der Wirkung einer Federbelastung in Gurtbandabzugsrichtung querbeweglich angeordnet ist.

Derartige Vorrichtungen sind bekannt (DE-A-1 531 545). Dabei sind die beiden Seitenschenkel des Gehäuses jeweils als Gabel mit zwei Zinken ausgebildet, wobei die Gabeln an einem Ende des Bodens des Gehäuses angeordnet sind, so daß sich die Zinken zum anderen Ende des Bodens hin erstrekken. Die Aufwickelwelle für das Gurtband ist mit den beiden äußeren Enden in den beiden Längsschlitzen der Gabeln aufgenommen, welche jeweils von den beiden Zinken der einen bzw. der anderen Gabel begrenzt und in Gurtbandabzugsrichtung offen sind. An dem den Gabeln abgewandten Ende sind auf dem Boden des Gehäuses zwei senkrecht stehende Streben vorgesehen, welche an den freien Enden mit den Sperrnasen des Gehäuses versehen sind. Die Streben mit den Sperrnasen sind jeweils vor der einen bzw. der anderen Sperrscheibe der Aufwickelwelle angeordnet, welche sich innen neben der jeweils benachbarten Gabel erstreckt.

Die Aufwickelwelle ist zweiteilig aufgebildet und besteht aus einer mittleren Hohlachse, welche in den beiden Gabeln auggenommen ist, sowie einer darauf drehbar gelagerten Trommel, deren beide Seitenwandungen von den beiden Sperrscheiben gebildet sind. Zwischen der Trommel und der Hohlachse ist eine Feder angeordnet, welche die Trommel in Gurtbandaufwickelrichtung belastet. An den beiden äußeren Enden ist die Hohlachse beiderseits der beiden Gabeln mit zwei stangenförmigen Hebeln versehen, welche sich auf den Boden des Gehäuses zu erstrecken und mit den dem Boden benachbarten Enden zwei Vorsprünge auf dem Boden hintergreifen, und zwar auf deren den Gabeln zugewandten Seiten. Normalerweise halten die beiden Hebel die Aufwickelwelle in den beiden Gabeln, so daß sie an den geschlossenen Enden der beiden Längsschlitze des Gehäuses anliegt. Wird jedoch auf das von der Aufwickelwelle kommende Gurtband in der zum Boden des Gehäuses parallelen Gurtbandabzugsrichtung ein ruckartiger Zug ausgeübt, dann wird die Aufwickelwelle mitgerissen, so daß deren beide Sperrscheiben mit den Verzahnungen in Eingriff mit den Sperrnasen des Gehäuses kommen und die Aufwickelwelle sich nicht mehr drehen kann.

Der Erfindung liegt die Aufgabe zugrunde, eine Vorrichtung der eingangs angegebenen Art zu schaffen, welche verhältnismäßig einfach und somit billig hergestellt, insbesondere zusammengebaut, werden kann und trotz der für die sichere und zuverlässige Funktionsweise erforderlichen, relativ hohen mechanischen Festigkeit nur ein verhältnismäßig geringes Gewicht aufweist, wobei es auch möglich sein soll, die Geräusche bei normaler Betriebsweise auf ein Mindestmaß zu reduzieren.

Diese Aufgabe ist dadurch gelöst, daß

c) die beiden Seitenschenkel des Gehäuses sich im wesentlichen über dessen gesamte Länge erstrecken und jeweils etwa L-förmig mit einem breiteren Abschnitt sowie einem schmaleren Abschnitt ausgebildet sind, wobei

d) die Sperrnasen des Gehäuses im Bereich der breiteren Abschnitte der Seitenschenkel vorgesehen sind und

e) die beiden Längsschlitze des Gehäuses sich in die breiteren Abschnitte der Seitenschenkel hinein erstrecken, so daß ihre geschlossenen Enden den Sperrnasen zugewandt sind und ihre offenen Mündungen sich auf der den schmaleren Abschnitten zugewandten Seite der breiteren Abschnitte befinden.

Vorteilhafte Ausgestaltungen der Erfindung sind in den Patentansprüchen 2 bis 17 gekennzeichnet.

Bei der erfindungsgemäßen Vorrichtung ist das Gehäuse so ausgebildet, daß es eine weitgehend mechanisierte Fertigung, insbesondere eine praktisch vollautomatische Montage der Vorrichtung ermöglicht, was die Produktionskosten nicht unbeträchtlich senkt, vor allem unter Berücksichtigung dessen, daß es sich bei Sicherheitsgurtbandaufrollvorrichtungen um Massenprodukte handelt. Die drei Hauptbaugruppen können bei der erfindungsgemäßen Vorrichtung aus drei verschiedenen, zueinander senkrechten Richtungen dem Gehäuse zugeführt und daran befestigt werden.

Bei Sicherheitsgurtbandaufrollvorrichtungen ist das Gehäuse aus Metall, in der Regel Stahlblech, das schwerste und teuerste Bauteil. Bei der erfindungsgemäßen Vorrichtung ist das Gewicht des Gehäuses beträchtlich reduziert, demgemäß also aus das Gesamtgewicht der Vorrichtung in entsprechendem Ausmaß, was dem allgemeinen Trend zum Leichtbau bei Kraftfahrzeugen aus Gründen der Verminderung des Kraftstoffverbrauches sehr entgegenkommt. Das Gehäuse besteht bei der erfindungsgemäßen Vorrichtung praktisch nur noch aus den für den Kraftfluß bei der Beanspruchung im Blockierfall, wenn also die Aufwickelwelle gegen Drehen gesperrt ist und der jeweilige Benutzer des Sicherheitsgurtes in den Gurt hineingedrückt wird, erforderlichen Bereichen. Neben der Gewichtsverminderung wirkt sich bei dem Gehäuse der erfindungsgemäßen Vorrichtung auch günstig aus, daß der Materialeinsatz reduziert ist, so daß auch insoweit Kosten eingespart werden.

Schon der Umstand, daß die Aufwickelwelle sich im Blockierfall symmetrisch am Gehäuse abstützt, läßt es zu, die Wanddicke des Gehäuses verhältnismäßig gering zu halten. Dazu kommen die vorstehend erläuterten Vorteile noch hinzu. Eine weitere Reduzierung der Wanddicke des Gehäuses ist dann möglich, wenn bei der erfindungsgemäßen Vorrichtung das Gehäuse mit zwei Paaren von Sperrnasen versehen wird, was bevorzugt ist. Dann erfolgt nämlich im Blockierfall die Kraftübertragung zwischen Aufwickelwelle und Gehäuse an vier Stellen. Die Wanddicke des Gehäuses kann um mindestens 30 % bei gleichzeitigem Verzicht auf vergütete bzw. hochfeste Teile vermindert werden, mit entsprechender Gewichts- und Kosteneinsparung. Im übrigen ist in diesem Zusammenhang darauf hinzuweisen, daß die Sicherheit der erfindungsgemäßen Vorrichtung dadurch erhöht ist, daß die beiden Längsschlitze des Gehäuses an den in Gurtbandabzugsrichtung hinteren, also den Sperrnasen des Gehäuses zugewandten Enden geschlossen sind, so daß die in Gurtbandabzugsrichtung quer bewegte Aufwickelwelle an diesen Enden zur Anlage kommen kann, um im Gehäuse in jedem Fall sicher gehalten zu werden.

Auch ist bei der erfindungsgemäßen Vorrichtung eine bezüglich der mittleren Längsebene spiegelsymmetrische Ausbildung des Gehäuses bevorzugt. Dieses vermittelt insbesondere den Vorteil, daß die Vorrichtungen dann in einem Kraftfahrzeug sowohl auf der linken als auch auf der rechten Seite schrägliegend eingebaut werden können und unterschiedliche Ausbildungen je nach dem Einbau auf der einen oder der anderen Kraftfahrzeugseite überflüssig sind, was die Herstellungskosten ebenfalls ganz beträchtlich reduziert.

Die erfindungsgemäße Vorrichtung kann ohne weiteres so ausgebildet werden, daß sich normalerweise praktisch keine hörbaren Geräusche entwickeln, indem dafür Vorsorge getroffen wird, daß bei normaler Betriebsweise zwischen der Aufwickelwelle und dem Gehäuse bzw. sonstigen Vorrichtungsteilen nur eine Kunststoff/Metall- bzw. Kunststoff/Kunststoff-Berührung stattfindet und lediglich im Blockierfall ein Metall/Metall-Kontakt zwischen den Sperrscheiben der Aufwickelwelle und den Sperrnasen des Gehäuses gegeben ist.

Nachstehend sind Ausführungsformen der erfindungsgemäßen Vorrichtung anhand der Zeichnung beispielsweise beschrieben. Darin zeigen schematisch :

Figur 1 eine perspektivische Explosionsdarstellung einer ersten Ausführungsform ;

Figur 2 und 3 jeweils die Ansicht der zusammengebauten Vorrichtung gemäß Figur 1 von rechts ohne die vordere Sensorbaugruppe in Ruhestellung bzw. in Blockierstellung ;

Figur 4 die Seitenansicht gemäß Figur 2 und 3 des Gehäuses einer zweiten Ausführungsform im Bereich der Längsschlitze desselben ; und

Figur 5 die Seitenansicht gemäß Figur 4 des Gehäuses einer dritten Ausführungsform.

Die Vorrichtung besteht im wesentlichen aus einem U-förmigen Gehäuse 1 aus Metall, insbesondere Stahlblech, einer Aufwickelwelle 2 für ein Gurtband 3, einer Gurtbandrückspulbaugruppe 4 und einer Sensorbaugruppe 5.

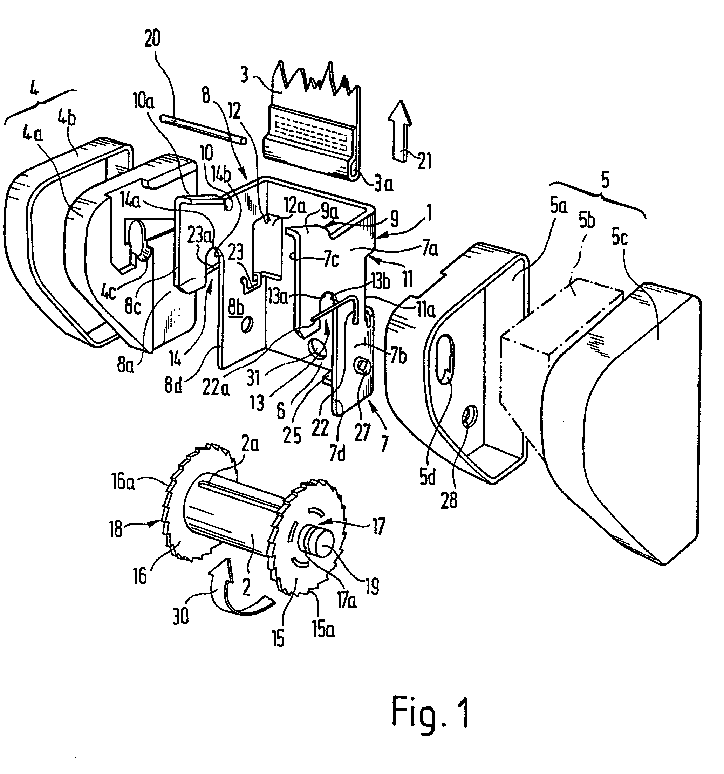

Das Gehäuse 1 weist einen Boden 6 sowie zwei zu demselben senkrechte, zueinander parallele Seitenschenkel 7 und 8 auf. Letztere erstrecken sich über die gesamte Länge des Gehäuses 1 und sind jeweils im wesentlichen L-förmig ausgebildet, so daß sich in dem in Figur 1 bis 3 oberen Bereich des Gehäuses 1 ein breiterer Abschnitt 7a bzw. 8a und im restlichen Bereich des Gehäuses 1 ein schmalerer Abschnitt 7b bzw. 8b ergibt. Die dem Boden 6 des Gehäuses 1 abgewandten, zum Boden 6 parallelen Längskanten 7c und 8c der beiden breiteren Abschnitte 7a und 8a erstrecken sich also in einem größeren Abstand vom Boden 6 als die demselben abgewandten und zu demselben parallelen Längskanten 7d und 8d der beiden schmaleren Abschnitte 7b und 8b der beiden Seitenschenkel 7 und 8.

Weiterhin ist das Gehäuse 1 mit zwei Paaren von Sperrnasen 9 und 10 bzw. 11 und 12 sowie zwei Längsschlitzen 13 und 14 versehen. Letztere erstrecken sich jeweils im einen Seitenschenkel 7 bzw. im anderen Seitenschenkel 8 im wesentlichen parallel zum Boden 6 des Gehäuses 1 und sind jeweils an dem in Figur 1 bis 3 oberen Ende 13a bzw. 14a geschlossen. Dabei ist die Anordnung so getroffen, daß die beiden Längsschlitze 13 und 14 sich von den Längskanten 7d und 8d der schmaleren Abschnitte 7b und 8b der Seitenschenkel 7 und 8 mit den geschlossenen Enden 13a und 14a in die breiteren Abschnitte 7a und 8a der Seitenschenkel 7 und 8 des Gehäuses 1 hinein erstrecken.

Die beiden ersten Sperrnasen 9 und 10 des Gehäuses 1 sind von zwei Zungen 9a und 10a gebildet, welche an dem in Figur 1 bis 3 oberen Ende des Gehäuses 1 von dessen beiden Seitenschenkeln 7 und 8 bzw. den breiteren Abschnitten 7a und 8a derselben nach innen aufeinanderzu umgebördelt sind.

Zur Ausbildung der beiden zweiten Sperrnasen 11 und 12 des Gehäuses 1 ist letzteres mit zwei Öffnungen 11a und 12a versehen, und zwar im Bereich der breiteren Abschnitte 7a und 8a der Seitenschenkel 7 und 8. Die beiden Öffnungen 11a und 12a bilden jeweils mit der in Figur 1 bis 3 oberen Endkante desjenigen Teils die Sperrnase 11 bzw. 12, welcher im Boden 6 des Gehäuses 1 neben dem einen Seitenschenkel 7 bzw. dem anderen Seitenschenkel 8 des Gehäuses 1 ausgebildet ist.

Die hohle, rohrförmige Aufwickelwelle 2 weist an den beiden Enden je eine Sperrscheibe 15 bzw. 16 mit einer Verzahnung 15a bzw. 16a am Außenumfang auf, welche mit der Aufwickelwelle 2 drehfest verbunden ist. Die beiden äußeren, von den Sperrscheiben 15 und 16 abstehenden Enden 17 und 18 der Aufwickelwelle 2 sind jeweils zapfenförmig ausgebildet und mit einer Ringnut 17a bzw. 18a versehen. Die beiden Enden 17 und 18 sind von den beiden Enden einer in die Aufwickelwelle 2 eingesetzten, die beiden Sperrscheiben 15 und 16 durchsetzenden Welle 19 aus Kunststoff gebildet. Die Aufwickelwelle 2 besteht demgegenüber aus Metall, einschließlich der beiden Sperrscheiben 15 und 16.

Das auf die Aufwickelwelle 2 aufwickelbare und davon abwickelbare Gurtband 3 erstreckt sich durch einen Längsschlitz 2a der Aufwickelwelle 2 mit einem schlaufenförmigen Ende 3a in die Aufwickelwelle 2 hinein, in welcher das Gurtband 3 mittels eines sich durch das schlaufenförmige Ende 3a erstreckenden Längsstiftes 20 befestigt ist. Das Gurtband 3 ist aus der Vorrichtung in Richtung des Pfeiles 21 abziehbar, wobei es sich von der Aufwickelwelle 2 abwickelt, und entgegen der Richtung des Pfeiles 21 in die Vorrichtung hinein zurückziehbar, wobei es sich auf die Aufwickelwelle 2 aufwickelt.

Die Aufwickelwelle 2 ist zwischen den beiden Seitenschenkeln 7 und 8 des Gehäuses 1 angeordnet und mit den beiden zapfenförmigen Enden 17 sowie 18 in den beiden Längsschlitzen 13 und 14 des Gehäuses 1 aufgenommen, und zwar drehbar gelagert sowie entgegen der Wirkung einer Federbalastung in der Gurtbandabzugsrichtung 21 querbeweglich, um mit den Verzahnungen 15a sowie 16a der beiden Sperrscheiben 15 und 16 in Eingriff mit den beiden ersten Sperrnasen 9 sowie 10 und den beiden zweiten Sperrnasen 11 sowie 12 zu kommen, in welchem Fall jegliche Drehung der Aufwickelwelle 2 im Gehäuse 1 in Gurtbandabzugsrichtung 21 sicher blockiert ist.

Gemäß Figur 1 ist das Gehäuse 1 zur Federbelastung der Aufwickelwelle 2 mit zwei Federn 22 und 23 versehen, welche jeweils an dem einen Ende 17 bzw. an dem anderen Ende 18 der Aufwickelwelle 2 angreifen und einen Schenkel 22a bzw. 23a aufweisen, der denjenigen Längsschlitz 13 bzw. 14 des Gehäuses 1 kreuzt, durch welchen das jeweilige, zapfenförmige Ende 17 bzw. 18 der Aufwickelwelle 2 ragt, in dessen Ringnut 17a bzw. 18a der Schenkel 22a bzw. 23a eingreift, um die Aufwickelwelle 2 axial zu positionieren.

Statt der beiden Federn 22 und 23 kann auch beispielsweise eine sich quer über das Gehäuse 1 erstreckende Feder mit zwei den Schenkeln 22a und 23a äquivalenten Schenkeln vorgesehen werden, welche ebenso wie die Federn 22 und 23 aus Federdraht besteht. Auch ist es denkbar, zur Federbelastung der Aufwickelwelle 2 entgegen der Gurtbandabzugsrichtung 21 nur eine Feder 22 bzw. 23 an dem einen bzw. dem anderen Ende 17 bzw. 18 der Aufwickelwelle 2 vorzusehen.

Die Gurtbandrückspulbaugruppe 4 und die Sensorbaugruppe 5 sind außen an den beiden Seitenschenkeln 7 und 8 des bezüglich seiner mittleren Längsebene spiegelsymmetrisch ausgebildeten Gehäuses 1 befestigt und breiter als die Seitenschenkel 7 und 8, insbesondere auch als deren breitere Abschnitte 7a und 8a. Sie bestimmen also das Außenprofil der Vorrichtung und bestehen jeweils aus einer inneren Federkassette 4a mit mindestens einer Spiralfeder zum Rückspulen des Gurtbandes 3 auf die Aufwickelwelle 2, welche also an der Aufwickelwelle 2 angreift, um das Gurtband 3 entgegen der Gurtbandabzugsrichtung 21 in die Vorrichtung zurückzuziehen und auf die Aufwickelwelle 2 aufzuwickeln, sowie einem äußeren Deckel 4b bzw. aus einer inneren Sensorkassette 5a zur Aufnahme eines Mechanismusses 5b für die fahrzeugsensitive Einleitung der Blockierung der Aufwickelwelle 2 im Gehäuse 1 und einem äußeren Deckel 5c. Die beiden Kassetten 4a und 5a bestehen aus Kunststoff, ebenso wie die beiden Deckel 4b und 5c.

Die Federkassette 4a und die Sensorkassette 5a weisen jeweils ein Langloch 4c bzw. 5d auf. Die beiden Länglöcher 4c und 5d fluchten mit den Längsschlitzen 13 und 14 in den beiden Seitenschenkeln 7 und 8 des Gehäuses 1 und nehmen die zapfenförmig ausgebildeten, durch die Längsschlitze 13 und 14 ragenden Enden 17 und 18 der Aufwickelwelle 2 auf. Normalerweise, wenn sich also die Vorrichtung in Ruhestellung befindet, drücken die beiden Federn 22 und 23 mit den Schenkeln 22a und 23a die Aufwickelwelle 2 mit den beiden Enden 17 und 18 gegen die in Figur 1 unteren Enden der beiden Länglöcher 4c und 5d.

Der in der Sensorkassette 5a untergebrachte Mechanismus 5b zur Einleitung der Blockierung der Aufwickelwelle 2 in Gurtbandabzugsrichtung 21 dann, wenn das mit der Vorrichtung versehene Kraftfahrzeug eine bestimmte Beschleunigung oder Verzögerung überschreitet, weist einen beweglich angeordneten Trägheitskörper 24 in Form einer Kugel und eine schwenkbar gelagerte Sperrklinke 25 auf, die durch den Trägheitskörper 24 in Eingriff mit der Verzahnung 15a der Sperrscheibe 15 der Aufwickelwelle 2 verschwenkbar ist. Der Trägheitskörper 24 ist in einer Schale 26 mit konischem Boden aufgenommen, und die Sperrklinke 25 ist auf der Innenseite des schmaleren Abschnitts 7b des Seitenschenkels 7 des Gehäuses 1 angeordnet, und zwar befestigt an einem Zapfen 27, welcher in dem Seitenschenkel 7 drehbar gelagert ist und durch eine Öffnung 28 in der Sensorkassette 5a in den Mechanismus 5b ragt.

Bei der Ausführungsform gemäß Figur 1 bis 3 verlaufen die beiden Längsschlitze 13 und 14 des Gehäuses 1 parallel zu dessen Boden 6, ebenso wie die Längskanten 7c und 8c der breiteren Abschnitte 7a und 8a sowie die Längskanten 7d und 8d der schmaleren Abschnitte 7b und 8b der beiden Seitenschenkel 7 und 8 des Gehäuses 1. Dabei sind die Längsschlitze 13 und 14 so angeordnet, daß die dem Boden 6 des Gehäuses 1 benachbarten Seitenflanken 13b und 14b der Längsschlitze 13 und 14 Fortsetzungen der Längskanten 7d und 8d der schmaleren Abschnitte 7b und 8b der Seitenschenkel 7 und 8 des Gehäuses 1 bilden, also in derselben zum Boden 6 parallelen Ebene verlaufen, wie die besagten Längskanten 7d und 8d.

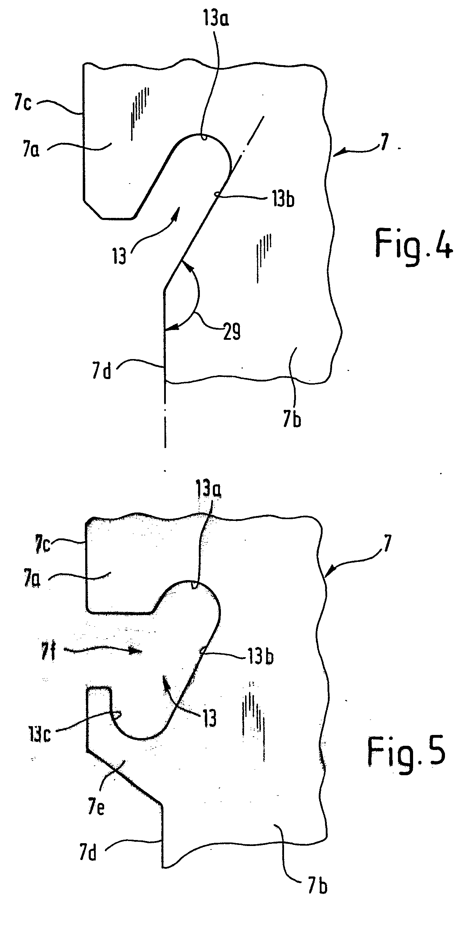

Die Ausführungsform nach Figur 4 unterscheidet sich lediglich dadurch von derjenigen nach Figur 1 bis 3, daß die beiden Längsschlitze 13 und 14 des Gehäuses 1 auf dessen Boden 6 zu geneigt sind. Dabei schließen die dem Boden 6 benachbarten Seitenflanken 13b und 14b der Längsschlitze 13 und 14 mit den zum Boden 6 parallelen Längskanten 7d und 8d der schmaleren Abschnitte 7b und 8b der beiden Seitenschenkel 7 und 8 des Gehäuses 1 einen stumpfen Winkel 29 ein.

Die Ausführungsform gemäß Figur 5 unterscheidet sich nur dadurch von derjenigen nach Figur 4, daß die beiden auf den Boden 6 des Gehäuses 1 zu geneigten Längsschlitze 13 und 14 des Gehäuses 1 jeweils nicht nur am oberen Ende 13a bzw. 14a geschlossen sind, sondern auch an dem in Figur 5 unteren Ende 13c bzw. 14c. Dazu sind die Seitenschenkel 7 und 8 des Gehäuses 1 jeweils mit einem hakenförmigen Abschnitt 7e bzw. 8e versehen, wobei die beiden Abschnitte 7e und 8e sich von den Längskanten 7d und 8d der schmaleren Abschnitte 7b und 8b zu den Längskanten 7c und 8c der breiteren Abschnitte 7a und 8a der Seitenschenkel 7 und 8 des Gehäuses 1 erstrecken, an den letztgenannten Längskanten 7c und 8c zwei Einführöffnungen 7f und 8f für die Aufwickelwelle 2 bilden und die unteren Enden 13c sowie 14c der Längsschlitze 13 und 14 des Gehäuses 1 umschließen, welche den schmaleren Abschnitten 7b und 8b der Seitenschenkel 7 und 8 benachbart sind.

Beim Zusammenbau der geschilderten Vorrichtung wird so vorgegangen, daß zunächst die aus der Wickelwelle 2 mit den beiden Sperrscheiben 15 und 16 sowie der Welle 19 bestehende Baugruppe bei den Ausführungsformen gemäß Figur 1 bis 3 bzw. 4 von unten und bei der Ausführungsform gemäß Figur 5 durch die Einführöffnungen 7f und 8f hindurch von der dem Boden 6 des Gehäuses 1 abgewandten Seite her in das Gehäuse 1 eingeführt wird, so daß die zapfenförmigen Enden 17 und 18 der Aufwickelwelle 2 in die Längsschlitze 13 und 14 des Gehäuses 1 eintreten, an welchem zuvor die beiden Federn 22 und 23 sowie die Sperrklinke 25 angebracht worden sind. Danach werden die Gurtbandrückspulbaugruppe 4 und die Sensorbaugruppe 5 in einander entgegengesetzten Richtungen an das Gehäuse 1 herangeführt, und zwar unter Aufnahme der Enden 17 und 18 der Aufwickelwelle 2, in deren Ringnuten 17a sowie 18a die Federn 22 und 23 mit ihren Schenkeln 22a und 23a eingreifen, in den Langlöchern 4c und 5d der Federkassette 4a bzw. der Sensorkassette 5a. Die Baugruppen 4 und 5 werden anschließend am Gehäuse 1 befestigt. Schließlich wird das Gurtband 3 mit dem schlaufenförmigen Ende 3a durch den Längsschlitz 2a der Aufwickelwelle 2 gesteckt und darin mittels des Längsstiftes 20 befestigt. Die Montage ist dann beendet.

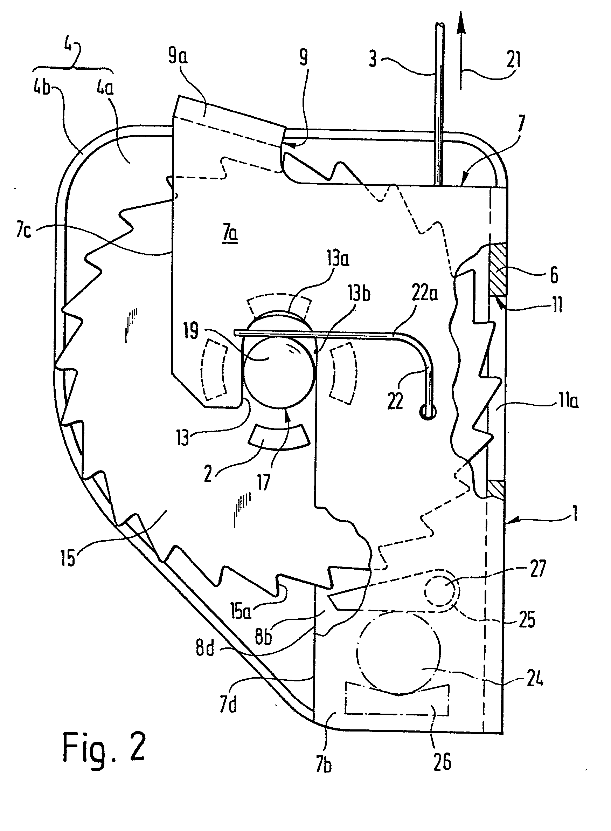

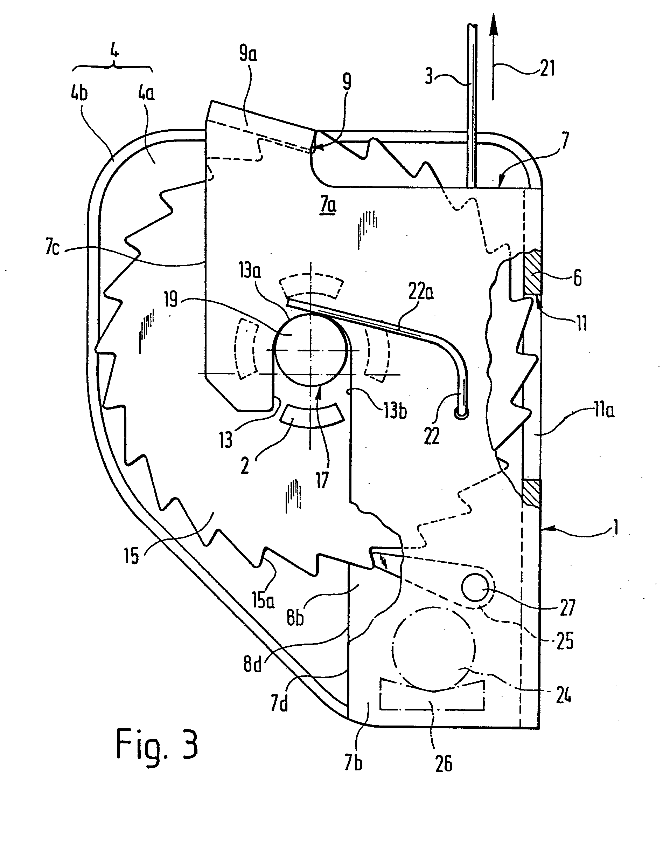

Die Funktionsweise der Vorrichtung ergibt sich aus Figur 2 und 3. In der Ruhestellung gemäß Figur 2 drücken die beiden Federn 22 und 23 die Aufwickelwelle 2 entgegen der Gurtbandabzugsrichtung 21 nach unten, so daß die beiden Enden 17 und 18 der Aufwickelwelle 2 an den unteren Enden der beiden Langlöcher 4c und 5d der Federkassette 4a bzw. der Sensorkassette 5a anliegen und die beiden Sperrscheiben 15 sowie 16 der Aufwickelwelle 2 sich außer Eingriff mit den ersten Sperrnasen 9 sowie 10 und den zweiten Sperrnasen 11 sowie 12 des Gehäuses 1 befinden. Beispielsweise können die Verzahnungen 15a und 16a der beiden Sperrscheiben 15 sowie 16 in einem Abstand von etwa 1 mm von den Sperrnasen 9 und 11 bzw. 10 und 12 angeordnet sein. Die Aufwickelwelle 2 läßt sich also im Gehäuse 1 frei drehen, um das Gurtband 3 in Richtung des Pfeiles 21 aus der Vorrichtung abzuziehen, wobei es sich von der Aufwickelwelle 2 abwickelt, welche durch die Kraft der Federn 22 und 23 gegen die Auszugskraft des Gurtbandes 3 in der unteren Ruhestellung gemäß Figur 2 gehalten wird, oder um das Gurtband 3 entgegengesetzt zum Pfeil 21 in die Vorrichtung zurückzuziehen, wobei es sich auf die Aufwickelwelle 2 aufwickelt, welche von der in der Federkassette 4a angeordneten Rückspulfeder oder den Rückspulfedern in Richtung des Pfeiles 30 (Figur 1) gedreht wird.

Die Vorrichtung wird mittels einer in eine mittlere Öffnung 31 (Figur 1) im Boden 6 des Gehäuses 1 eingeschraubten Schraube am jeweiligen Kraftfahrzeug so befestigt, daß der Boden 6 des Gehäuses 1 sich im wesentlichen parallel zur Gurtbandabzugsrichtung 21 erstreckt.

Erfährt das Kraftfahrzeug eine einen bestimmten Grenzwert überschreitende Beschleunigung oder Verzögerung, dann bewegt sich der kugelförmige Trägheitskörper 24 aus der Ruhelage gemäß Figur 2, um die Sperrklinke 25 in die Stellung gemäß Figur 3 zu verschwenken, so daß sie in Eingriff mit der Verzahnung 15a der gegenüberliegenden Sperrscheibe 15 kommt. Wird nunmehr am Gurtband 3 in Gurtbandabzugsrichtung 21 gezogen, weil der Fahrzeuginsasse, welcher den Sicherheitsgurt angelegt hat, nach vorne geschleudert wird, dann hat dieses aufgrund der Abstützung der Sperrscheibe 15 an der Sperrklinke 25 sofort zur Folge, daß die aufwickelwelle 2 sich in den beiden Längsschlitzen 13 und 14 des Gehäuses 1 quer in Gurtbandabzugsrichtung 21 bewegt, und zwar entgegen der Wirkung der beiden Federn 22 und 23, um mit den Verzahnungen 15a sowie 16a der beiden Sperrscheiben 15 sowie 16 in Eingriff mit den zugehörigen Sperrnasen 9 und 11 bzw. 10 und 12 des Gehäuses 1 zu kommen. Jede Drehung der Aufwickelwelle 2 ist dann im Gehäuse 1 sicher und zuverlässig verhindert. Die Sperrklinke 25 kann dabei ausreichend nachgiebig ausgebildet werden, um im Blockierfall komprimiert werden zu können, so daß der geschilderte gegenseitige Eingriff von Aufwickelwelle 2 und Gehäuse 1 sicher gewährleistet ist. Beispielsweise kann die Sperrklinke 25 aus einem stabilen, entsprechend nachgiebigen Kunststoff hergestellt sein.

Sobald die Belastung des Gurtbandes 3 aufhört, wird die Aufwickelwelle 2 durch die in der Federkassette 4a befindliche Rückspulfeder bzw. Rückspulfedern in Richtung des Pfeiles 30 gemäß Figur 1 zurückgedreht, so daß die Vorrichtung aus der Blockierstellung gemäß Figur 3 in die Ruhestellung gemäß Figur 2 zurückkehrt.

Neben dieser geschilderten fahrzeugsensitiven Wirkungsweise kann die Vorrichtung auch bandsensitiv arbeiten, wobei die Aufwickelwelle 2 ohne Zuhilfenahme des Trägheitskörpers 24 und Wirksamwerden der Sperrklinke 25 aus der Ruhestellung gemäß Figur 2 in die Blockierstellung gemäß Figur 3 bewegt wird. Wenn nur am Gurtband 3 in Gurtbandabzugsrichtung 21 mit einem genügend großen Ruck gezogen wird, dann wird die Aufwickelwelle 2 aufgrund ihrer trägen Masse gegen die Kraft der beiden Federn 22 und 23 aus ihrer Ruhestellung gemäß Figur 2 in die Blockierstellung nach Figur 3 hochgerissen. Dabei läßt sich der Beginn dieses Hochreißens, also das Ansprechen der Vorrichtung bei bandsensitiver Wirkungsweise, durch entsprechende Wahl derjenigen Kraft leicht einstellen, mit welcher die beiden Federn 22 und 23 die Aufwickelwelle 2 entgegen der Gurtbandabzugsrichtung 21 belasten.

## Ansprüche

1. Vorrichtung zum Aufrollen des Gurtbandes von Sicherheitsgurten, insbesondere für Kraftfahrzeuge, mit

a) einem U-förmigen Gehäuse (1), welches einen Boden sowie zwei zu demselben senkrechte, zueinander parallele Seitenschenkel (7 und 8) aufweist und mit zwei Sperrnasen (9 und 10 ; 11 und 12) sowie zwei Längsschlitzen (13 und 14) versehen ist, die jeweils im einen bzw. anderen Seitenschenkel im wesentlichen parallel zur Gurtbandabzugsrichtung verlaufen und an einem Ende (13a und 14a) geschlossen sind, und

b) einer Aufwickelwelle (2) für das Gurtband (3), welche an den beiden Enden je eine am Außenumfang verzahnte Sperrscheibe (15 und 16) aufweist und in den Längsschlitzen des Gehäuses drehbar gelagert sowie zum Eingriff mit den Verzahnungen der Sperrscheiben in die Sperrnasen des Gehäuses entgegen der Wirkung einer Federbelastung (durch 22) in Gurtbandabzugsrichtung querbeweglich angeordnet ist, dadurch gekennzeichnet, daß

c) die beiden Seitenschenkel (7 und 8) des Gehäuses (1) sich im wesentlichen über dessen gesamte Länge erstrecken und jeweils etwa L-förmig mit einem breiteren Abschnitt (7a bzw. 8a) sowie einem schmaleren Abschnitt (7b bzw. 8b) ausgebildet sind, wobei

d) die Sperrnasen (9 und 10 ; 11 und 12) des Gehäuses (1) im Bereich der breiteren Abschnitte (7a und 8a) der Seitenschenkel (7 und 8) vorgesehen sind und

e) die beiden Längsschlitze (13 und 14) des Gehäuses (1) sich in die breiteren Abschnitte (7a und 8a) der Seitenschenkel (7 und 8) hinein erstrecken, so daß ihre geschlossenen Enden (13a und 14a) den Sperrnasen (9 und 10 ; 11 und 12) zugewandt sind und ihre offenen Mündungen sich auf der den schmaleren Abschnitten (7b und 8b) zugewandten Seite der breiteren Abschnitte (7a und 8a) befinden.

2. Vorrichtung nach Anspruch 1, dadurch gekennzeichnet, daß die beiden Längsschlitze (13 und 14) des Gehäuses (1) parallel zu dessen Boden (6) verlaufen, wobei die dem Boden (6) benachbarten Seitenflanken (13b und 14b) der Längsschlitze (13 und 14) Fortsetzungen der zum Boden (6) parallelen Längskanten (7d und 8d) der schmaleren Abschnitte (7b und 8b) der Seitenschenkel (7 und 8) des Gehäuses (1) bilden.

3. Vorrichtung nach Anspruch 1, dadurch gekennzeichnet, daß die beiden Längsschlitze (13 und 14) des Gehäuses (1) auf dessen Boden (6) zu geneigt sind, wobei die dem Boden (6) benachbarten Seitenflanken (13b und 14b) der Längsschlitze (13 und 14) mit den zum Boden (6) parallelen Längskanten (7d und 8d) der schmaleren Abschnitte (7b und 8b) der Seitenschenkel (7 und 8) des Gehäuses (1) einen stumpfen Winkel (29) einschließen.

4. Vorrichtung nach Anspruch 3, dadurch gekennzeichnet, daß die beiden Längsschlitze (13 und 14) des Gehäuses (1) jeweils an beiden Enden (13a und 13c bzw. 14a und 14c) geschlossen sind, wobei die Seitenschenkel (7 und 8) des Gehäuses (1) jeweils mit einem hakenförmigen Abschnitt (7e bzw. 8e) versehen sind und diese Abschnitte (7e und 8e) sich von den Längskanten (7d und 8d) der schmaleren Abschnitte (7b und 8b) zu den Längskanten (7c und 8c) der breiteren Abschnitte (7a und 8a) der Seitenschenkel (7 und 8) erstrecken, an den letztgenannten Längskanten (7c und 8c) zwei Einführöffnungen (7f und 8f) für die Aufwickelwelle (2) bilden und die den schmaleren Abschnitten (7b und 8b) der Seitenschenkel (7 und 8) benachbarten Enden (13c und 14c) der Längsschlitze (13 und 14) umschließen.

5. Vorrichtung nach einem der vorstehenden Ansprüche, dadurch gekennzeichnet, daß die beiden Sperrnasen (9 und 10) des Gehäuses (1) von zwei an den den schmaleren Abschnitten (7b und 8b) abgewandten Enden der breiteren Abschnitte (7a und 8a) der Seitenschenkel (7 und 8) des Gehäuses (1) umgebördelten Zungen (9a und 10a) gebildet sind.

6. Vorrichtung nach einem der vorstehenden Ansprüche, dadurch gekennzeichnet, daß die beiden bzw. zwei weitere Sperrnasen (11 und 12) des Gehäuses (1) von den den schmaleren Abschnitten (7b und 8b) der Seitenschenkel (7 und 8) des Gehäuses (1) abgewandten Endkanten zweier im Boden (6) des Gehäuses (1) neben dem einen bzw. dem anderen Seitenschenkel (7 bzw. 8) im

11    0 067 322    12

Bereich des breiteren Abschnitts (7a bzw. 8a) desselben ausgebildeten Öffnungen (11a und 12a) gebildet sind.

7. Vorrichtung nach einem der vorstehenden Ansprüche, dadurch gekennzeichnet, daß das Gehäuse (1) zur Federbelastung der Aufwickelwelle (2) mit einer an jedem der beiden Enden (17 und 18) der Aufwickelwelle (2) angreifenden Feder versehen ist.

8. Vorrichtung nach Anspruch 7, dadurch gekennzeichnet, daß die Feder zwei die Längsschlitze (13 und 14) des Gehäuses (1) kreuzende Schenkel (22a und 23a) aufweist, welche in zwei Ringnuten (17a und 18a) eingreifen, die in den jeweils zapfenförmig ausgebildeten, die Längsschlitze (13 und 14) durchsetzenden Enden (17 und 18) der Aufwickelwelle (2) vorgesehen sind.

9. Vorrichtung nach einem der Ansprüche 1 bis 6, dadurch gekennzeichnet, daß das Gehäuse (1) zur Federbelastung der Aufwickelwelle (2) mit mindestens einer an einem Ende (17 bzw. 18) der Aufwickelwelle (2) angreifenden Feder (22 bzw. 23) versehen ist.

10. Vorrichtung nach Anspruch 9, dadurch gekennzeichnet, daß die Feder (22 bzw. 23) einen denjenigen Längsschlitz (13 bzw. 14) des Gehäuses (1) kreuzenden Schenkel (22a bzw. 23a) aufweist, welchen das zapfenförmig ausgebildete Ende (17 bzw. 18) der Aufwickelwelle (2) durchsetzt, wobei der Schenkel (22a bzw. 23a) in eine Ringnut (17a bzw. 18a) eingreift, welche in dem Ende (17 bzw. 18) vorgesehen ist.

11. Vorrichtung nach einem der vorstehenden Ansprüche, dadurch gekennzeichnet, daß das Gehäuse (1) aus Metall besteht und die Aufwickelwelle (2) an den beiden Enden jeweils mit einem Zapfen (17 bzw. 18) aus Kunststoff versehen ist, welcher den benachbarten Längsschlitz (13 bzw. 14) des Gehäuses (1) durchsetzt.

12. Vorrichtung nach einem der vorstehenden Ansprüche, dadurch gekennzeichnet, daß das Gehäuse (1) bezüglich der mittleren Längsebene spiegelsymmetrisch ausgebildet ist.

13. Vorrichtung nach einem der vorstehenden Ansprüche, dadurch gekennzeichnet, daß außen an den beiden Seitenschenkeln (7 und 8) des Gehäuses (1) zwei Bauteile (4a und 5a) mit je einem Langloch (4c bzw. 5d) befestigt sind, wobei die Langlöcher (4c und 5d) mit den Längsschlitzen (13 und 14) in den Seitenschenkeln (7 und 8) fluchten und die jeweils zapfenförmig ausgebildeten, die Längsschlitze (13 und 14) durchsetzenden Enden (17 und 18) der Aufwickelwelle (2) aufnehmen.

14. Vorrichtung nach Anspruch 13, dadurch gekennzeichnet, daß die Bauteile (4a und 5a) aus Kunststoff bestehen.

15. Vorrichtung nach Anspruch 13 oder 14, dadurch gekennzeichnet, daß die Bauteile jeweils von einer Gurtbandrückspulfederkassette (4a) bzw. einer Sensorkassette (5a) gebildet sind, welche breiter als die Seitenschenkel (7 und 8) des Gehäuses (1) sind.

16. Vorrichtung nach einem der vorstehenden Ansprüche, gekennzeichnet durch einen Mechanismus (5b) zur Einleitung der Blockierung der Aufwickelwelle (2) in Gurtbandabzugsrichtung (21) bei Überschreiten einer bestimmten Fahrzeugbeschleunigung oder -verzögerung, welcher einen beweglich angeordneten Trägheitskörper (24) und eine schwenkbar gelagerte Sperrklinke (25) aufweist, die durch den Trägheitskörper (24) in Eingriff mit der Verzahnung (15a bzw. 16a) mindestens einer Sperrscheibe (15 bzw. 16) der Aufwickelwelle (2) verschwenkbar ist, so daß letztere sich bei Zug am Gurtband (3) in den Längsschlitzen (13 und 14) des Gehäuses (1) quer in Gurtbandabzugsrichtung (21) bewegt und mit den Versahnungen (15a und 16a) der Sperrscheiben (15 und 16) in die Sperrnasen (9 und 10 ; 11 und 12) des Gehäuses (1) eingreift.

17. Vorrichtung nach Anspruch 16 in Verbindung mit Anspruch 15, dadurch gekennzeichnet, daß der Trägheitskörper (24) in der Sensorkassette (5a) angeordnet ist.

**Claims**

1. Device for rolling-up the webbing of safety belts, particularly for motor-vehicles, comprising

a) a U-shaped housing (1) which has a bottom and two lateral webs (7 and 8) perpendicular with respect to the bottom and mutually parallel and which is provided with two locking cams (9 and 10 ; 11 and 12) as well as with two longitudinal slots (13 and 14) which in each instance extend in the one and respectively the other lateral web substantially parallel to the pulling-out direction of the webbing and are closed at one end (13a und 14a), and

b) a winding-on shaft (2) for the webbing (3) which at each of both ends has a locking disc (15 and 16) toothed on the outer periphery and which is rotatably mounted in the longitudinal slots of the housing and is arranged therein transversely movable in the pulling-out direction of the webbing against the action of a spring-loading (by 22) for engagement with the toothings of the locking discs in the locking cams of the housing, characterized in that

c) the two lateral webs (7 and 8) of the housing (1) extend substantially over its entire length and are in each instance designed approximately L-shaped with a broader section (7a or respectively 8a) and a narrower section (7b or respectively 8b),

d) the locking cams (9 and 10 ; 11 and 12) of the housing (1) being provided in the region of the broader sections (7a and 8a) of the lateral webs (7 and 8), and

e) the two longitudinal slots (13 ans 14) of the housing (1) extending into the broader sections (7a and 8a) of the lateral webs (7 and 8), so that their closed ends (13a and 14a) are directed towards the locking cams (9 and 10 ; 11 and 12) and their open mouths are situated on that side of the broader sections (7a and 8a) which is directed towards the narrower sections (7b and 8b).

2. Device according to claim 1, characterized in that the two longitudinal slots (13 and 14) of the housing (1) extend parallel to its bottom (6), the side flanks (13b and 14b) of the longitudinal slots (13 and 14) adjacent to the bottom (6) forming continuations of the longitudinal edges (7d and 8d) of the narrower sections (7b and 8b) of the lateral webs (7 and 8) of the housing (1), which longitudinal edges extend parallel to the bottom (6).

3. Device according to claim 1, characterized in that the two longitudinal slots (13 and 14) of the housing (1) are inclined towards its bottom (6), the side flanks (13b and 14b) of the longitudinal slots (13 and 14) adjacent to the bottom (6) forming an obtuse angle (29) with the longitudinal edges (7d and 8d) of the narrower sections (7b and 8b) of the lateral webs (7 and 8) of the housing (1), which longitudinal edges extend parallel to the bottom (6).

4. Device according to claim 3, characterized in that the two longitudinal slots (13 and 14) of the housing (1) are in each instance closed at both ends (13a and 13c or respectively 14a and 14c), the lateral webs (7 and 8) of the housing (1) being in each instance provided with a hook-shaped section (7e or respectively 8e) and these sections (7e and 8e) extending from the longitudinal edges (7d and 8d) of the narrower sections (7b and 8b) to the longitudinal edges (7c and 8c) of the broader sections (7a and 8a) of the lateral webs (7 and 8), forming at the latter longitudinal edges (7c and 8c) two introduction openings (7f and 8f) for the winding-on shaft (2) and encircling the ends (13c and 14c) of the longitudinal slots (13 and 14) adjacent to the narrower sections (7b and 8b) of the lateral webs (7 and 8).

5. Device according to any one of the preceding claims, characterized in that the two locking cams (9 and 10) of the housing (1) are formed by two tongues (9a and 10a) bent aside at the ends of the broader sections (7a and 8a) of the lateral webs (7 and 8) of the housing (1) which face away from the narrower sections (7b and 8b).

6. Device according to any one of the preceding claims, characterized in that the two of respectively two further locking cams (11 and 12) of the housing (1) are formed by the end edges of two openings (11a and 12a) provided in the bottom (6) of the housing (1) next to the one and respectively the other lateral web (7 and respectively 8) in the region of the broader section (7a of respectively 8a) of same, which end edges face away from the narrower sections (7b and 8b) of the lateral webs (7 and 8) of the housing (1).

7. Device according to any one of the preceding claims, characterized in that for the spring-loading of the winding-on shaft (2) the housing (1) is provided with a spring which engages each of the two ends (17 and 18) of the winding-on shaft (2).

8. Device according to claim 7, characterized in that the spring has two legs (22a and 23a) crossing the longitudinal slots (13 and 14) of the housing (1) and engaging in two annular grooves (17a and 18a) which are provided in the ends (17 and 18) of the winding-on shaft (2), which ends are in each instance journal-shaped and extend through the longitudinal slots (13 and 14).

9. Device according to any one of claims 1 to 6, characterized in that for the spring-loading of the winding-on shaft (2) the housing (1) is provided with at least one spring (22 or respectively 23) engaging one end (17 or respectively 18) of the winding-on shaft (2).

10. Device according to claim 9, characterized in that the spring (22 or respectively 23) has a leg (22a or respectively 23a) which crosses that longitudinal slot (13 or respectively 14) of the housing (1), through which the journal-shaped end (17 or respectively 18) of the winding-on shaft (2) extends, the leg (22a or respectively 23a) engaging in an annular groove (17a or respectively 18a) provided in said end (17 or respectively 18).

11. Device according to any one of the preceding claims, characterized in that the housing (1) consists of metal and the winding-on shaft (2) is provided at both ends in each instance with a journal of plastic extending through the adjacent longitudinal slot (13 or respectively 14) of the housing (1).

12. Device according to any one of the preceding claims, characterized in that the housing (1) is designed mirror-symmetrical with regard to the central longitudinal plane.

13. Device according to any one of the preceding claims, characterized in that two units (4a and 5a) each having an elongated slot (4c or respectively 5d) are attached to the outside of the two lateral webs (7 and 8) of the housing (1), the elongated slots (4c and 5d) being flush with the longitudinal slots (13 and 14) in the lateral webs (7 and 8) and accommodating the ends (17 and 18) of the winding-on shaft (2), which ends are in each instance journal-shaped and extend through the longitudinal slots (13 and 14) of the housing (1).

14. Device according to claim 13, characterized in that the units (4a and 5a) consist of plastic.

15. Device according to claim 13 or 14, characterized in that the units are in each instance formed by a webbing rewinding spring cassette (4a) and respectively a sensor cassette (5a), which are broader than the lateral webs (7 and 8) of the housing (1).

16. Device according to any one of the preceding claims, characterized by a mechanism (5b) for initiating the blocking of the winding-on shaft (2) in the pulling-out direction (21) of the webbing when a certain motor-vehicle acceleration or deceleration is exceeded, which mechanism comprises a movably arranged interia body (24) and a pivotably mounted locking pawl (25) adapted to be pivoted by the inertia body (24) into engagement with the toothing (15a or respectively 16a) of at least one locking disc (15 or respectively 16) of the winding-on shaft (2), so that the latter, when a pull is exerted on the webbing (3), moves transversely in the pulling-out direction (21) of the webbing in the longitudinal slots (13 and 14) of the housing (1), and with the toothings (15a and 16a) of the locking discs (15 and 16) engages with the locking cams (9 and 10 ; 11 and 12) of the housing (1).

17. Device according to claim 16 as dependent on claim 15, characterized in that the inertia body (24) is arranged in the sensor cassette (5a).

## Revendications

1. Dispositif pour l'enroulement de la sangle des ceintures de sécurité, notamment pour véhicules automobiles, ledit dispositif comprenant :

a) un boîtier (1) en forme de U qui présente un fond ainsi que deux ailes latérales (7 et 8) perpendiculaires à ce dernier, et parallèles entre elles, et qui est muni de deux dents d'arrêt (9 et 10 ; 11 et 12) ainsi que de deux fentes longitudinales (13 et 14) qui s'étendent respectivement dans l'une et dans l'autre aile latérale, sensiblement parallèlement à la direction d'extraction de la sangle et qui sont fermées à une extrémité (13a et 14a), et

b) un arbre (2) d'enroulement de la sangle (3), qui présente à chacune de ses extrémités un disque à rochet (15 et 16) denté sur sa périphérie extérieure, et qui est monté rotatif et est agencé dans les fentes longitudinales du boîtier pour pouvoir se déplacer transversalement, dans la direction d'extraction de la sangle, à l'encontre d'une sollicitation par ressort (exercée par 22), pour entrer en prise par les dentures des disques à rochet, avec les dents d'arrêt du boîtier, caractérisé en ce que

c) les deux ailes latérales (7 et 8) du boîtier (1) s'étendent sensiblement sur toute la longueur de celui-ci et sont conformées chacune, à peu près, en forme de L, avec un segment plus large (7a ou 8a respectivement) et un segment plus étroit (7b ou 8b respectivement),

d) les dents d'arrêt (9 et 10 ; 11 et 12) du boîtier (1) étant prévues dans la région des segments plus larges (7a et 8a) des ailes latérales (7 et 8), et

e) les deux fentes longitudinales (13 et 14) du boîtier (1) entrant dans les segments plus larges (7a et 8a) des ailes latérales (7 et 8) de sorte que leurs extrémités fermées (13a et 14a) sont dirigées vers les dents d'arrêt (9 et 10 ; 11 et 12) et que leurs débouchés ouverts se trouvent sur le côté des segments plus larges (7a et 8a) qui est dirigé vers les segments plus étroits (7b et 8b).

2. Dispositif selon la revendication 1, caractérisé en ce que les deux fentes longitudinales (13 et 14) du boîtier (1) s'étendent parallèlement à son fond (6), les bords latéraux (13b et 14b) des fentes longitudinales (13 et 14) qui sont proches du fond (6) formant des prolongements des bords longitudinaux (7d et 8d) parallèles au fond (6) des segments plus étroits (7b et 8b) des ailes latérales (7 et 8) du boîtier (1).

3. Dispositif selon la revendication 1, caractérisé en ce que les deux fentes longitudinales (13 et 14) du boîtier (1) sont inclinées par rapport au fond (6) de ce boîtier, les bords latéraux (13b et 14b) des fentes longitudinales (13 et 14) qui sont proches du fond (6) formant un angle obtus (29) avec les bords longitudinaux (7d et 8d) des segments plus étroits (7d et 8d) les ailes latérales (7 et 8) du boîtier (1) qui sont parallèles au fond (6).

4. Dispositif selon la revendication 3, caractérisé en ce que les deux fentes longitudinales (13 et 14) du boîtier (1) sont fermées chacune aux deux extrémités (13a et 13c ou 14a et 14c respectivement), les ailes latérales (7 et 8) du boîtier (1) étant munies chacune d'un segment (7e ou 8e respectivement) en forme de crochet et ces segments (7e et 8e) s'étendant des bords longitudinaux (7d et 8d) des segments plus étroits (7b et 8b) aux bords longitudinaux (7c et 8c) des segments plus larges (7a et 8a) des ailes latérales (7 et 8) formant, au droit des bords longitudinaux (7c et 8c) cités en dernier, deux ouvertures d'entrée (7f et 8f) sur l'arbre d'enroulement (2) et entourant les extrémités (13c et 14c) des fentes longitudinales (13 et 14) qui sont proches des segments plus étroits (7b et 8b) des ailes latérales (7 et 8).

5. Dispositif selon l'une des revendications précédentes caractérisé en ce que les deux dents d'arrêt (9 et 10) du boîtier (1) sont formées par deux languettes (9a et 10a) rabattues aux extrémités des segments plus larges (7a et 8a) des ailes latérales (7 et 8) du boîtier (1) qui sont éloignées des segments plus étroits (7b et 8b).

6. Dispositif selon l'une des revendications précédentes, caractérisé en ce que les deux dents d'arrêt ou deux autres dents d'arrêt (11 et 12) du boîtier (1) sont formées par les bords terminaux, éloignés des segments plus étroits (7b et 8b) des ailes latérales (7 et 8) du boîtier (1), de deux ouvertures (11a et 12a) formées dans le fond (6) du boîtier (1) à côté de l'une ou de l'autre respectivement des ailes latérales (7 et 8 respectivement) dans la région du segment plus large (7a ou 8a respectivement) de cette aile.

7. Dispositif selon l'une des revendications précédentes, caractérisé en ce que le boîtier (1) est muni, pour la sollicitation par ressort de l'arbre d'enroulement (2), d'un ressort attaquant chacune des deux extrémités (17 et 18) de l'arbre d'enroulement (2).

8. Dispositif selon la revendication 7, caractérisé en ce que le ressort présente deux branches (22a et 23a) qui croisent les fentes longitudinales (13 et 14) du boîtier (1) et, qui s'engagent dans deux gorges annulaires (17a et 18a) qui sont prévues dans les extrémités (17 et 18) de l'arbre d'enroulement (2), réalisées en forme de tourillons et traversant les fentes longitudinales (13 et 14).

9. Dispositif selon l'une des revendications 1 à 6, caractérisé en ce que le boîtier (1) est muni, pour la sollicitation par ressort de l'arbre d'enroulement (2), d'au moins un ressort (22 ou 23 respectivement) qui attaque une extrémité (17 ou 18 respectivement) de l'arbre d'enroulement (2).

10. Dispositif selon la revendication 9, caractérisé en ce que le ressort (22 ou 23 respectivement) présente une branche (22a ou 23a respectivement) qui croise la fente longitudinale (13 ou 14 respectivement) du boîtier (1) traversée par l'extrémité en forme de tourillon (17 ou 18 respectivement) de l'arbre d'enroulement (2), la branche (22a ou 23a respectivement) s'engageant dans une gorge annulaire (17a ou 18a respectivement) qui est prévue dans l'extrémité (17 ou 18 respectivement).

11. Dispositif selon l'une des revendications précédentes, caractérisé en ce que le boîtier (1) est en métal et l'arbre d'enroulement (2) est muni à chacune des extrémités d'un tourillon (17 ou 18 respectivement) en matière plastique qui traverse la fente longitudinale voisine (13 ou 14 respectivement) du boîtier (1).

12. Dispositif selon l'une des revendications précédentes, caractérisé en ce que le boîtier (1) est réalisé sous une forme miroir-symétrique par rapport à son plan longitudinal central.

13. Dispositif selon l'une des revendications précédentes, caractérisé en ce que, extérieurement aux deux ailes latérales (7 et 8) du boîtier (1), sont fixés deux éléments (4a et 5a) munis chacun d'un trou allongé (4c ou 5d respectivement), les trous allongés (4c et 5d) étant alignés sur les fentes longitudinales (13 et 14) des ailes latérales (7 et 8) et recevant respectivement les extrémités (17 et 18) en forme de tourillon de l'arbre d'enroulement (2) qui traversent les fentes longitudinales (13 et 14).

14. Dispositif selon la revendication 13, caractérisé en ce que les éléments (4a et 5a) sont réalisés en matière plastique.

15. Dispositif selon la revendication 13 ou 14, caractérisé en ce que les éléments sont constitués respectivement par une cassette de ressort enrouleur de sangle (4a) et une cassette de capteur (5a), qui sont plus larges que les ailes latérales (7 et 8) du boîtier (1).

16. Dispositif selon l'une des revendications précédentes, caractérisé par un mécanisme (5b) destiné à déclencher le blocage de l'arbre d'enroulement (2) dans le sens (21) d'extraction de la sangle lorsque le véhicule excède une certaine accélération ou décélération, ce mécanisme comprenant un corps d'inertie (24) montée mobile et un cliquet d'arrêt (25) monté oscillant qui peut pivoter sous l'action de ce corps d'inertie (24) pour entrer en prise avec la denture (15a ou 16a respectivement) de l'un des disques à rochet (15 ou 16 respectivement) de l'arbre d'enroulement (2), de sorte que, en présence d'une traction exercée sur la sangle (3), cet arbre se déplace transversalement dans les fentes longitudinales (13 et 14) du boîtier (1), dans le sens (21) d'extraction de la sangle et entre en prise, par les dentures (15a et 16a) des disques à rochet (15 et 16) avec les dents d'arrêt (9 et 10 ; 11 et 12) du boîtier (1).

17. Dispositif selon la revendication 16, en combinaison avec la revendication 15, caractérisé en ce que le corps d'inertie (24) est disposé dans la cassette de capteur (5a).

Fig. 1

Fig. 2

Fig. 3

Fig.4

Fig.5